# EUROPÄISCHE PATENTSCHRIFT

(11) **EP 1 243 855 B1**
(45) Veröffentlichungstag und Bekanntmachung des Hinweises auf die Patenterteilung: **26.09.2007**
(21) Anmeldenummer: 02005680.0
(22) Anmeldetag: 12.03.2002
(51) Int. Cl.: F23J 13/04

(54) **Dichtungsanordnung zur Abdichtung einer Verbindungsstelle von zwei miteinander verbundenen Rohren**
Sealing arrangement for the connection of two pipes
Arrangement de joints d'étanchéité pour la connexion de deux tuyaux

(30) Priorität: 22.03.2001 DE 20105012 U
(43) Veröffentlichungstag der Anmeldung: 25.09.2002
(73) Patentinhaber: Kutzner + Weber GmbH, 82216 Maisach (DE)
(72) Erfinder: Pabst, Manfred, 56329 St. Goar (DE); Thomann, Hans-Peter, 82327 Tutzing/Kampberg (DE)
(74) Vertreter: Tiesmeyer, Johannes

(56) Entgegenhaltungen:
- EP-A- 0 546 893
- EP-A- 1 223 375
- DE-A- 3 509 774
- DE-C- 868 542
- US-A- 2 269 664
- US-A- 3 913 955

## Beschreibung

Die Erfindung bezieht sich auf eine Dichtungsanordnung zur Abdichtung einer Verbindungsstelle zweier Rohre gemäß dem Oberbegriff von Anspruch 1. Vorzugsweise bezieht sich die Erfindung auf eine Dichtungsanordnung zur Abdichtung der Verbindungsstelle zweier Rohre eines Abgasleitungssystems für Abgasanlagen.

Derartige Abgasleitungssysteme weisen oftmals eine Mehrzahl von dünnwandigen Metallrohren auf, wobei an der Verbindungsstelle zweier Rohre eines der beiden Rohre mit seinem einen Ende in das benachbarte Ende des anderen Rohrs eingeschoben ist. Die Verbindungsstelle zwischen den Rohren ist mittels einer Dichtungsanordnung der hier betrachteten Art gegen das Austreten von Rauchgasen etc., die durch das Abgasleitungssystem abgeführt werden sollen, abzudichten.

Aus der EP 0 546 893 A1 ist eine gattungsgemäße Dichtungsanordnung zur Abdichtung einer Verbindungsstelle von zwei Rohren bekannt. Die bekannte Dichtungsanordnung weist einen Dichtungsring auf, der aus einem komprimierbaren Material hergestellt ist, wobei sich dieser Dichtungsring in axialer Richtung über den gesamten Verbindungsbereich der beiden Rohre erstreckt. Der Dichtungsring weist eine an die Rohrform angepasste Form auf und ist als Spezialprofil für eine Rohrverbindung gemäß EP 0 546 893 A1 ausgebildet.

Eine andere Dichtungsanordnung ist aus der DE 200 11 766 U1 bekannt. Der Dichtungsring dieser bekannten Dichtungsanordnung weist ein Spezialprofil aus zwei über einen Verbindungsabschnitt miteinander verbundene Schenkeln zur Begrenzung einer zur Innenseite des Dichtprofilrings hin offenen Umlaufnut auf. In der Montageanordnung an der Verbindungsstelle nimmt die Umlaufnut radial nach außen gewölbte und zur Herstellung eines Formschlusses zwischen den Rohren vorgesehene Sicken auf. Als Fixierring dient eine radial außen auf dem Dichtungsring aufsitzende Schlauchfeder.

Der Erfindung liegt die Aufgabe zugrunde, eine Dichtungsanordnung der eingangs genannten Art bereitzustellen, die mit einfachen Mitteln eine wirksame Abdichtung der Verbindungsstelle ermöglicht und zuverlässig funktioniert.

Zur Lösung der Aufgabe wird eine Dichtungsanordnung gemäß Anspruch 1 vorgeschlagen.

Die Erfindung ermöglicht die Verwendung eines Dichtungsringes mit einem einfachen, unkompliziert herstellbaren Rundprofil zur Abdichtung der Verbindungsstelle. Es kann sich beispielsweise um einen einfachen handelsüblichen O-Ring handeln. Ein wesentlicher Vorteil ist überdies darin zu sehen, dass der Dichtungsring die Verbindungsstelle unmittelbar im Bereich des radialen Überganges von dem inneren Rohr zu dem äußeren Rohr an der Endkante des äußeren Rohres abdichtet. Rauchgas und/oder Kondensat kann somit an der Verbindungsstelle nicht austreten. Hinzuzufügen ist noch, dass die erfindungsgemäße Dichtungsanordnung eine zuverlässige Abdichtung auch dann gewährleisten kann, wenn ein einfach zu montierender Dichtungsring mit relativ kleinem Querschnitt verwendet wird.

In der Ausgestaltung der erfindungsgemäßen Dichtungsanordnung ist der Fixierring als Klemmband mit einander in Umfangsrichtung überlappenden und im Bereich der Überlappung aneinander festgelegten Klemmbandenden ausgebildet. Die Umfangslänge des Klemmbandes sollte veränderbar einstellbar und fixierbar sein, wie dies beispielsweise von Schlauchklemmen bzw. Rohrschellen her bekannt ist. Durch Verändern der Umfangslänge des Klemmbandes kann der vom Klemmband auf den Dichtungsring ausgeübte Anpressdruck variiert werden. Ferner können derartige Klemmbänder auch in erfindungsgemäßen Dichtungsanordnungen für unterschiedliche Rohrdurchmesser verwendet werden.

In einer bevorzugten Weiterbildung der erfindungsgemäßen Dichtungsanordnung kann der vorzugsweise als Klemmband ausgebildete Fixierring den Dichtungsring in der Montageanordnung umlaufend radial außen haubenartig umschließen, so dass der Dichtungsring vor äußeren, z.B. mechanischen Einflüssen geschützt ist.

Der Fixierring kann in jeder zur haubenförmigen Umfassung und zur Fixierung des Dichtungsrings geeigneten Weise ausgebildet sein, wobei der haubenartig radial nach außen gewölbte Querschnitt des Fixierrings beispielsweise die Form eines Bogens haben oder V-förmig oder U-förmig gestaltet sein kann.

Weisen die beiden Rohre im Bereich ihrer einander überlappenden Enden radial nach außen jeweils eine eine formschlüssige Verbindung gewährleistende Sicke auf, so kann in einer weiteren bevorzugten Ausbildung der Dichtungsanordnung das Klemmband die Sicken radial außen haubenartig umschließen. Ein Vorteil dieser Weiterbildung der Erfindung ist eine Stabilisierung der Verbindung der beiden Rohrenden in axialer Richtung. Darüber hinaus kann durch entsprechende Wahl der Spannung des Klemmbandes eine Fixierung der beiden Rohre gegen Verdrehung um die senkrecht zu ihrer umlaufenden Verbindung stehenden Achse erreicht werden. Ein weiterer Vorteil dieser Weiterbildung in Kombination mit der Sicke ist darin zu sehen, dass auch die Dichtungsanordnung in ihrer bestimmungsgemäßen Abdichtposition sicher fixiert ist.

Die vorliegende Erfindung wird im Folgenden anhand der beiliegenden Zeichnungen näher erläutert werden. Es zeigen:
- Fig. 1: einen Rohrbogen aus mehreren miteinander verbundenen Rohren, deren Verbindungsstellen jeweils mittels einer erfindungsgemäßen Dichtungsanordnung abgedichtet sind; wobei eine der Dichtungsanordnungen bei I aufgebrochen bzw. geschnitten dargestellt ist.
- Fig. 2: eine Darstellung eines vergrößerten Querschnitts des Details I aus Fig. 1;
- Fig. 3: eine parallel zu einer Ringachse verlaufende Ansicht des Fixierrings der erfindungsgemäßen Dichtungsanordnung, und
- Fig. 4: eine senkrecht zur Ringachse verlaufende Ansicht des Fixierrings der erfindungsgemäßen Dichtungsanordnung.

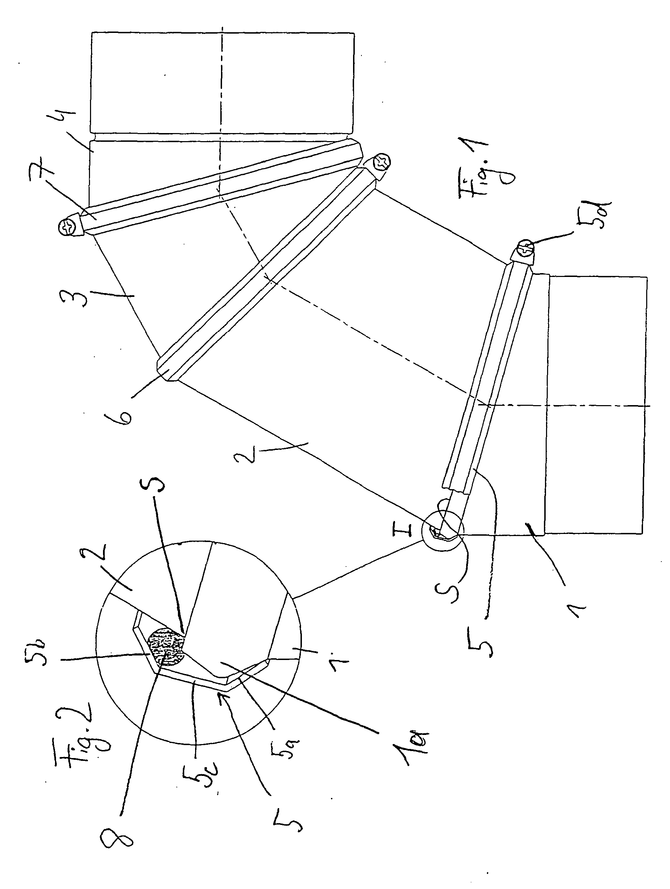

In Fig. 1 ist schematisch ein Rohrbogen gezeigt, wie er typischerweise in einem Abgasleitungssystem vorkommen kann. Der Rohrbogen besteht aus einer Mehrzahl miteinander verbundener Rohre 1, 2, 3 und 4, die bevorzugt einen kreisrunden Querschnitt aufweisen und im Beispielsfall aus einem Metall, z.B. Edelstahl oder Aluminium, bestehen. An einer Verbindungsstelle von jeweils zwei Rohren greift jeweils eines der Rohre in das andere Rohr ein. Jede der drei in Fig. 1 gezeigten Verbindungsstellen ist mit einer jeweiligen erfindungsgemäßen Dichtungsanordnung abgedichtet. Im Folgenden wird die Verbindungsstelle der Rohre 1 und 2 und deren Abdichtung als Beispiel im Detail beschrieben.

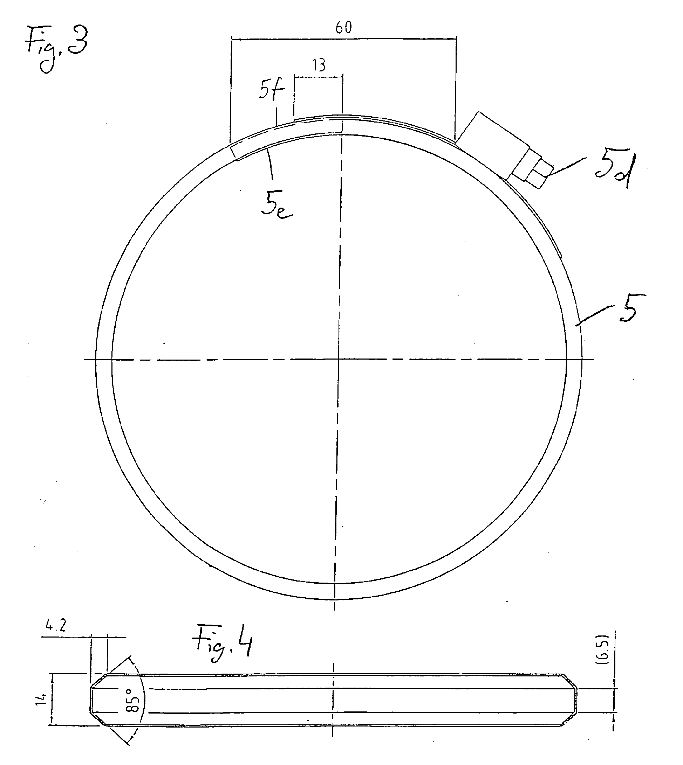

Die einander benachbarten Rohre 1 und 2 sind jeweils mit einer Sicke versehen. Die Sicke 1a des Rohres 1 ist in den Figuren 1 und 2 erkennbar, wobei das Ende des Rohrs 2 mit einer nicht dargestellten Sicke formschlüssig radial innerhalb der Sicke 1a liegt. Allerdings braucht die Verbindung der Rohre 1 und 2 nicht grundsätzlich mittels Sicken zu erfolgen, die beiden Rohrenden der Rohre 1 und 2 können z.B. auch derart ausgebildet sein, dass der Innenradius des einen Rohres größer oder gleich dem Außenradius des anderen Rohres ist, so dass das Rohrende mit dem größeren Durchmesser über das Rohrende mit dem kleineren Durchmesser geschoben werden kann.

Die Verbindungsstelle zwischen dem Rohr 1 und dem Rohr 2 wird am Ende des radial außen liegenden Rohrs 1 unmittelbar im Bereich der Stufe S mit der erfindungsgemäßen Dichtungsanordnung 5, 8 abgedichtet.

Als Dichtungsring 8 dient im Beispielsfall ein handelsüblicher O-Ring aus einem elastomeren Material, beispielsweise Gummi. Der O-Ring 8 wird umlaufend durch ein ihn von radial außen haubenartig umschließendes Klemmband 5 an der Stufe S fixiert und gleichzeitig gegen das axiale Ende des radial äußeren Rohres 1 sowie gegen das Rohr 2 gedrückt, so dass umlaufend die Abdichtwirkung des O-Rings 8 verstärkt wird. Das Klemmband 5 bildet somit einen Fixierring zur Fixierung des Dichtungsringes 8 in der Dichtungsposition. Es besteht im Beispielsfall aus einem Metall, z.B. Edelstahl oder Aluminium.

Der haubenartige Querschnitt des Klemmbands 5 wird, wie in Fig. 2 gezeigt, durch zwei Schenkel 5a und 5b gebildet, die über einen Verbindungsabschnitt 5c miteinander verbunden sind und die vom Verbindungsabschnitt 5c aus radial nach innen verlaufen. Im vorliegenden Ausführungsbeispiel wird dabei durch den Schenkel 5b umlaufend auf den O-Ring 8 eine Kraft in Richtung der Stufe S ausgeübt, wodurch eine Kraftkomponente des O-Rings 8 umlaufend auf das axiale Ende des radial äußeren Rohrs 1 erzeugt wird und eine Kraftkomponente umlaufend auf das Rohr 2 wirkt, so dass umlaufend die Abdichtungswirkung der Verbindungsstelle verstärkt wird.

Wie in Fig. 2 dargestellt, umschließt das Klemmband 5 haubenartig auch die Sicke 1a radial von außen, wobei der dem O-Ring 8 entfernt liegende Schenkel 5a des Klemmbands 5 an der dem O-Ring 8 abgewandten Schulter der Sicke 1a zu liegen kommt. Durch das Anliegen des Schenkels 5a an der Sicke 1a und durch das Anliegen des anderen Schenkels 5b an dem 0-Ring 8 erfolgt eine Fixierung der Dichtungsanordnung 5, 8 in axialer Richtung. Gleichzeitig erfolgt dadurch eine Fixierung der Verbindung der beiden Rohre 1 und 2 gegen ein Lösen der beiden Rohre 1 und 2 voneinander. Durch die Wahl einer geeigneten Spannung des Klemmbands 5 kann durch Reibschluss der Dichtungsanordnung mit den beiden Rohren 1 und 2 zusätzlich ein Verdrehen der beiden Rohre 1 und 2 relativ zueinander verhindert werden.

Wie in Fig. 3 dargestellt, ist das Klemmband 5 in der Art einer Schlauchschelle ausgebildet, wobei seine Enden 5e, 5f in Umfangsrichtung einander in einem Bereich überlappen und wobei die Umfangslänge des Klemmbands 5 durch Veränderung des Überlappungsbereichs zum Beispiel über ein Schraubengetriebe 5d veränderbar einstellbar und fixierbar ist.

Bei der Montage der Dichtungsanordnung 5, 8 kann in einem ersten Schritt der O-Ring 8 am Ende des radial außen liegenden Rohrs 1 der bereits verbundenen Rohre 1 und 2 an die Verbindungsstelle angelegt werden, wobei dann das Klemmband 5, bei dem eine Umfangslänge eingestellt ist, bei der sich das Klemmband 5 leicht über die Verbindungsstellen der Rohre streifen lässt, über die Verbindungsstelle der beiden Rohre 1 und 2 gelegt wird. Nach der Positionierung des Klemmbands 5 an der vorgesehenen Verbindungsstelle wird der Umfang des Klemmbands 5 so weit verringert, dass der O-Ring 8 und die Sicke 1a haubenartig umschlossen werden, so dass der O-Ring 8 unmittelbar an dem axialen Ende des radial äußeren Rohrs so fixiert wird, dass er die Verbindungsstelle am Übergang zwischen dem radial inneren Rohr 2 zu dem radial äußeren Rohr 1 umlaufend abdichtet. Der Umfang des Klemmbands 5 wird dabei vorzugsweise so eingestellt und fixiert, dass das Klemmband 5 einen Druck auf den O-Ring 8 ausübt, derart, dass die Dichtwirkung des O-Rings 8 verstärkt wird und dass die Verbindung zwischen dem Rohr 1 und dem Rohr 2 insbesondere in der Weise fixiert wird, dass eine Verdrehung der beiden Rohre 1 und 2 gegeneinander verhindert wird.

Wie in den Figuren dargestellt und oben erläutert, stellt die Dichtungsanordnung 5, 8 eine einfache und wirksame Maßnahme zur Abdichtung und Fixierung der Verbindungsstelle dar. Die Elemente 5, 8 können vergleichsweise kompakt und filigran ausgebildet sein, so dass die Dichtungsanordnung von der optischen Gestaltung her unauffällig bzw. gefällig aussieht.

Wenngleich im Ausführungsbeispiel als Dichtungsring 8 ein O-Ring mit Rundquerschnitt herangezogen wurde, können in alternativen Ausführungsbeispielen Dichtungsringe mit geeigneten anderen Querschnitten verwendet werden.

## Patentansprüche

1. Dichtungsanordnung zur Abdichtung einer Verbindungsstelle zweier Rohre (1, 2), von denen eines (2) an der Verbindungsstelle unter Ausbildung einer Stufe (S) in das andere (1) eingreift, wobei die Dichtungsanordnung einen Dichtungsring (8) und einen Fixierring (5) zur Fixierung des Dichtungsrings (8) an der Verbindungsstelle umfasst, und der Fixierring (5) dazu eingerichtet ist, den Dichtungsring (8) an der Stufe (S) so zu fixieren, dass er die Verbindungsstelle an der Stufe (S) zwischen dem radial inneren Rohr (2) zu dem radial äußeren Rohr (1) umlaufend abdichtet, **dadurch gekennzeichnet, dass** der Dichtungsring (8) ein Elastomerdichtungsring ist, der in unbelastetem Zustand einen Rundquerschnitt, insbesondere Kreisquerschnitt aufweist und der unmittelbar an der Stufe (S) anliegt, und dass der Fixierring (5) als Klemmband mit einander in Umfangsrichtung überlappenden Klemmbandenden (5e, 5f) ausgebildet ist.

2. Dichtungsanordnung nach Anspruch 1, **dadurch gekennzeichnet, dass** die Umfangslänge des Fixierrings (5) veränderbar einstellbar und fixierbar ist.

3. Dichtungsanordnung nach einem der vorangehenden Ansprüche, **dadurch gekennzeichnet, dass** der Fixierring (5) den Dichtungsring (8) in der Montageanordnung radial außen haubenartig umschließt.

4. Dichtungsanordnung nach Anspruch 3, wobei die beiden Rohre (1, 2) im Bereich ihrer einander überlappenden Enden radial nach außen jeweils eine eine formschlüssige Verbindung gewährleistende Sicke (1a) aufweisen, **dadurch gekennzeichnet, dass** der Fixierring (5) auch die Sicken (1a) radial außen haubenartig umschließt.

5. Dichtungsanordnung nach einem der Ansprüche 1 bis 4, **dadurch gekennzeichnet, dass** der Fixierring (5) zwei umlaufende Schenkel (5a, 5b) aufweist, die über einen Verbindungsabschnitt (5c) miteinander verbunden sind, wobei der eine Schenkel (5b) am Dichtungsring (8) anliegt und der andere Schenkel (5a) am radial äußeren Rohr (1) anliegt.

6. Dichtungsanordnung nach einem der Ansprüche 1 bis 5, **dadurch gekennzeichnet, dass** der Dichtungsring (8) ein handelsüblicher O-Ring ist.

7. Dichtungsanordnung nach einem der vorhergehenden Ansprüche, **dadurch gekennzeichnet, dass** der Fixierring aus einem Metall, insbesondere Edelstahl, oder aus einem Kunststoff besteht.

8. Rohrbaugruppe aus wenigstens zwei an einer jeweiligen gemeinsamen Verbindungsstelle miteinander verbundenen Rohren (1, 2), wobei die Verbindungsstelle mittels einer Dichtungsanordnung (5, 8) nach einem der Ansprüche 1 bis 7 abgedichtet ist.

9. Rohrbaugruppe nach Anspruch 8, **dadurch gekennzeichnet, dass** die Rohre (1, 2) an der Verbindungsstelle durch miteinander in Eingriff stehende Sicken (1a) oder/und Falze formschlüssig miteinander verbunden sind.

## Claims

1. A sealing assembly for sealing a joint between two pipes (1,2), one (2) of which engages into the other (12) at the joint to form a step (S), wherein the sealing assembly comprises a sealing ring (8) and a fixing ring (5) for fixing the sealing ring (8) at the joint, and the fixing ring (5) is arranged with a view to fixing the sealing ring (8) at the step (S) so that it circumferentially seals the joint at the step (S) between the radially inner pipe (2) relative to the radially outer pipe (1), **characterised in that** the sealing ring (8) is an elastomeric sealing ring which, in the unloaded condition, is of round cross-section, in particular circular cross-section, and which abuts directly against the step (S), and **in that** the fixing ring (5) is in the form of a clamping band with clamping band ends (5e,5f) overlapping one another in a circumferential direction.

2. A sealing according to Claim 1, **characterised in that** the circumferential length of the fixing ring (5) can be variably adjusted and fixed.

3. A sealing assembly according to one of the preceding Claims, **characterised in that** in the assembled arrangement the fixing ring (5) surrounds the sealing ring (8) radially outwards in the manner of a hood.

4. A sealing assembly according to Claim 3, **characterised in that** in the vicinity of their mutually overlapping ends the two pipes (1,2) each have radially outwardly a bead (1a) ensuring a form-locking connection, **characterised in that** the fixing ring (5) also surrounds the beads (a) radially outwards in the manner of a hood.

5. A sealing assembly according to any one of Claims 1 to 4, **characterised in that** the fixing ring (5) has two circumferential arms (5a,5b) which are joined together via a connecting portion (5c), wherein one arm (5b) abuts against the sealing ring (8) and the other arm (5a) abuts against the radially outer pipe (1).

6. A sealing assembly according to any one of Claims 1 to 5, **characterised in that** the sealing ring (8) is a conventional O-ring.

7. A sealing assembly according to any one of the preceding Claims, **characterised in that** the fixing ring consists of metal, in particular stainless steel, or of a plastics material.

8. A pipe assembly comprising at least two pipes (1,2) joined together at the respective common joint, wherein the joint is sealed by means of a sealing assembly (5,8) according to any one of Claims 1 to 7.

9. A pipe assembly according to Claim 8, **characterised in that** the pipes (1,2) are joined together in a form-locking manner by mutually engaging beads (1a) and/or rebates.

## Revendications

1. Arrangement de joints d'étanchéité destiné à réaliser l'étanchéité au niveau d'une jonction de deux tuyaux (1, 2), dont l'un (2) s'engage dans l'autre (1) au niveau de la jonction en formant un gradin (S), l'arrangement d'étanchéité comprenant une bague d'étanchéité (8) et une bague de fixation (5) servant à fixer la bague d'étanchéité (8) au niveau de la jonction et la bague de fixation (5) étant aménagée pour fixer la bague d'étanchéité (8) au niveau du gradin (S) de manière à réaliser l'étanchéité de la périphérie de la jonction au niveau du gradin (S) entre le tuyau (2) situé à l'intérieur de manière radiale vers le tuyau (1) situé à l'extérieur de manière radiale, **caractérisée en ce que** la bague d'étanchéité (8) est une bague d'étanchéité en élastomère, qui à l'état non chargé présente une section arrondie, en particulier une section circulaire et qui s'appuie directement contre le gradin (S), et que la bague de fixation (5) est réalisée sous forme de bande de serrage avec des extrémités de bande de serrage (5e, 5f) se chevauchant l'une l'autre dans le sens périphérique.

2. Arrangement de joints d'étanchéité selon la revendication 1, **caractérisée en ce que** la longueur périphérique de la bague de fixation (5) peut être fixée et réglée de manière ajustable.

3. Arrangement de joints d'étanchéité selon l'une quelconque des revendications précédentes, **caractérisé en ce que** la bague de fixation (5) entoure la bague d'étanchéité (8) dans la disposition de montage radialement vers l'extérieur à la manière d'un chapeau.

4. Arrangement de joints d'étanchéité selon la revendication 3, dans laquelle les deux tuyaux (1, 2) présentent radialement vers l'extérieur dans la zone de leurs extrémités se chevauchant l'une l'autre respectivement une moulure (1a) assurant une liaison par complémentarité de forme, **caractérisée en ce que** la bague de fixation (5) entoure également les moulures (1a) radialement vers l'extérieur à la manière d'un chapeau.

5. Arrangement de joints d'étanchéité selon l'une quelconque des revendications 1 à 4, **caractérisé en ce que** la bague de fixation (5) présente deux branches périphériques (5a, 5b), qui sont reliées l'une à l'autre par le biais d'une section de raccordement (5c) dans laquelle l'une des branches (5b) s'appuie contre la bague d'étanchéité (8) et l'autre branche (5a) s'appuie contre le tuyau (1) situé à l'extérieur de manière radiale.

6. Arrangement de joints d'étanchéité selon l'une quelconque des revendications 1 à 5, **caractérisé en ce que** la bague d'étanchéité (8) est un joint torique standard.

7. Arrangement de joints d'étanchéité selon l'une quelconque des revendications précédentes, **caractérisé en ce que** la bague de fixation est en métal, en particulier en acier inoxydable, ou en plastique.

8. Ensemble de tuyaux constitué d'au moins deux tuyaux (1, 2) reliés l'un à l'autre au niveau d'une jonction respectivement commune, dans lequel la jonction est réalisée de manière étanche au moyen d'un arrangement de joints d'étanchéité (5, 8) selon l'une quelconque des revendications 1 à 7.

9. Ensemble de tuyaux selon la revendication 8, **caractérisée en ce que** les tuyaux (1, 2) sont reliés l'un à l'autre par complémentarité de forme au niveau de la jonction par des moulures (1a) ou/et rainures en prise l'une avec l'autre.
